# EUROPEAN PATENT SPECIFICATION

(11) **EP 0 547 245 B1**
(45) Date of publication and mention of the grant of the patent: **17.03.1999**
(21) Application number: 92914391.5
(22) Date of filing: 06.07.1992
(51) Int. Cl.: G06T 7/00

(54) **IMAGE PROCESSING METHOD FOR INDUSTRIAL VISUAL SENSOR**
BILDVERARBEITUNGSVERFAHREN FÜR INDUSTRIELLEN OPTISCHEN SENSOR
PROCEDE DE TRAITEMENT D'IMAGES POUR DETECTEUR VIDEO INDUSTRIEL

(30) Priority: 05.07.1991 JP 191291/91
(43) Date of publication of application: 23.06.1993
(73) Proprietor: FANUC LTD., Minamitsuru-gun, Yamanashi 401-05 (JP)
(72) Inventor: WATANABE, Atsushi, Room 7-207 Fanuc, Minamitsuru-gun Yamanashi 401-05 (JP); TERAWAKI, Fumikazu, Room 8-106 Fanuc, Minamitsuru-gun amanashi 401-05 (JP); KATSUHISA, Hiroshi, Fanuc Dai-3 Vira-karamatsu, Yamanasi 401-05 (JP)
(74) Representative: Billington, Lawrence Emlyn
(86) International application number: JP9200853
(87) International publication number: WO9301558

(56) References cited:
- JP-A-56 072 771
- JP-A-58 115 700
- JP-A-60 204 183

## Description

The present invention relates to an image processing method for a visual sensor for object recognition which is utilized as a visual organ of an industrial robot or the like.

In conventional practices, a visual sensor is incorporated in a production line, and the respective positions and attitudes of objects to be detected, which are successively fed onto the production line, are detected in succession by means of the visual sensor. The detected data are transformed into the data for the coordinate system of a machine, such as a robot, and are transmitted as correction data to the robot or other machine. Then, the operation of the robot or the machine is corrected in accordance with the received correction data.

In order to obtain the correction data, according to a system utilizing the visual sensor arranged in the above-described manner, teaching data are needed in order to process an image photographed by means of a camera, identify the object and detect the position and attitude thereof. In such a conventional method, however, these teaching data used to be set by detecting the value of a parameter for adjustment from one image(sample) of the object.

It is impossible, however, to check if the teaching data obtained in the aforesaid manner represent the average data of the detected objects which have been successively fed to the production line. In some cases, if the objects successively delivered to the production line are subject to change with the passage of time, the current teaching data has to be modified to cope with such a situation. For example, when the teaching data for detecting a hole in a component is obtained from a sample, those components which are successively fed to the line may have a little oil sticking to their holes from a certain point of time and on. In such a case, this teaching data is no longer proper for the detection of those holes, thus requiring a modification.

Thus, in order to evaluate whether or not the teaching data once established suits the present situation, or in order to modify the teaching data for higher reliability, it is necessary to review as many previously processed image data as possible. The storage capacity of a frame memory of the visual sensor is extremely limited, so that as many image data as necessary cannot be stored and retained under normal conditions. More specifically, an image photographed by the camera in response to a snap command is stored in the image memory (frame memory) after undergoing the processing for the gray scale shading by means of an image processor. Normally, a gray scale image in the frame memory has a capacity of 256 × 256 × 1 bytes, and the number of image data the frame memory can store ranges from about 4 to 20 on account of restrictions on the part of the hardware.

When unsuccessful processing such as a failure in detection or wrong detection has occurred, the resulting defective image must be investigated to determine the cause of the failure. Since the conventional visual sensor has no means for storing or retaining the defective image, in order to determine the cause of such failure, the current operation has to be interrupted in order to pick up again the object concerned by the camera.

In the medical field, it is known from JP-A-60-204183 to store picture information data from an endoscope, on an optical system recording disk of a large recording capacity. In this way recording and reproduction can be conducted very quickly and easily, and the medical information may be edited electronically and recorded on a medium of large storage capacity.

The object of the present invention is to provide an image processing method for an industrial visual sensor, capable of obtaining proper teaching data based on a number of past image data and examining the cause of unsuccessful processing, if any, after operation is finished.

According to one aspect of the present invention there is provided an image processing method for examining images of objects obtained by a visual sensor installed in an industrial environment, the objects being articles which are processed industrially and the method comprising steps of: loading a frame memory with image data of an object picked-up by a camera; processing the image data in accordance with a processing program; reading the image data from the frame memory; annexing identification data to the read data in accordance with said processing program; and transferring to and storing the resulting data in an auxiliary storage device so as to store therein image data of a plurality of object images; subsequently transferring undetectable or wrongly detected image data stored in said auxiliary storage device from said auxiliary storage device to said frame memory for the examination of said transferred image data in dependence upon a selection of an image made with reference to relevant identification data annexed to the image data, the selected image being displayed on a screen and the corresponding image data being subjected to preprocessings and then reproductive execution by an appropriate image processing program selected in dependence upon the identification data associated with the image, whereby the image of an object is reviewed subsequently in order to investigate that image to examine the cause of the failure in the object detection.

According to another aspect of the present invention there is provided an image processing method for examining images of objects obtained by a visual sensor installed in an industrial environment, the objects being articles which are processed industrially and the method comprising steps of: loading a frame memory with image data of an object picked-up by a camera; processing the image data in accordance with a processing program; reading the image data from the frame memory; annexing identification data to the read data in accordance with said processing program; and transferring to and storing the resulting data in an auxiliary storage device so as to store therein image data of a plurality of object images; subsequently transferring, one after another, normally detected image data stored in said auxiliary storage device from said auxiliary storage device to said frame memory for the examination of said transferred image data in dependence upon a selection of an image made with reference to relevant identification data annexed to the image data, the selected image being displayed on a screen and the corresponding image data being subjected to reproductive execution by an appropriate image processing program selected in dependence upon the identification data associated with the image, whereby the image of an object is reviewed subsequently in order to investigate that image by observing the positional relationship between said object and a displayed sign (e.g. a cross) which should coincide with a particular point on the displayed object.

Preferably, the identification data include at least one of those data such as data for specifying the image data or a detected value for the image data, program name, calibration data, correction data, and the like; when the visual sensor includes a plurality of cameras, identification data of a camera used to fetch the image concerned may be annexed to the aforesaid identification data; furthermore identification data indicative of unsuccessful processing, such as a failure in detection, if any, may be annexed to the identification data.

Preferably, a large-capacity storage device, such as an optical disk, photomagnetic disk, hard disk, cassette streamer or DAT, is used as the auxiliary storage device.

Preferably, of those image data stored in the frame memory, all those of unsuccessful detection are transferred to the auxiliary storage device for storage, while only some of the normally detected image data are selectively transferred and stored according to a predetermined basis.

According to the present invention, as described above, the auxiliary storage device is attached to the industrial visual sensor so that each image data photographed by the camera and stored in the frame memory are annexed with necessary identification data, and are transferred to the auxiliary storage device to be stored and retained therein. In determining or examining whether initially established teaching data is appropriate or not, or in investigating the cause of unsuccessful processing, if any, after the end of the operation, the image data saved in the storage device are transferred individually to the frame memory, and the past image processing program is reproductively executed. Thus, a number of image data processed before the production line is stopped can be saved and reproduced, so that the reliability of the established teaching data can be evaluated afterward. Thus, in further executing the image processing after this point, whether the currently established teaching data should be modified or not can be determined, and, moreover, the propriety of the result of actual modification can be examined by using the saved image data. Also, detection failure of the visual sensor can be reproduced afterward without stopping the production line on the spot, thereby enabling the necessary improvement of the visual sensor system for a higher operating efficiency.

### Brief Description of the Drawings

Fig. 1 is a block diagram of a visual sensor for carrying out one embodiment of a method of the present invention; and
Fig. 2 is a flow chart showing the operation of the one embodiment of the method of the present invention.

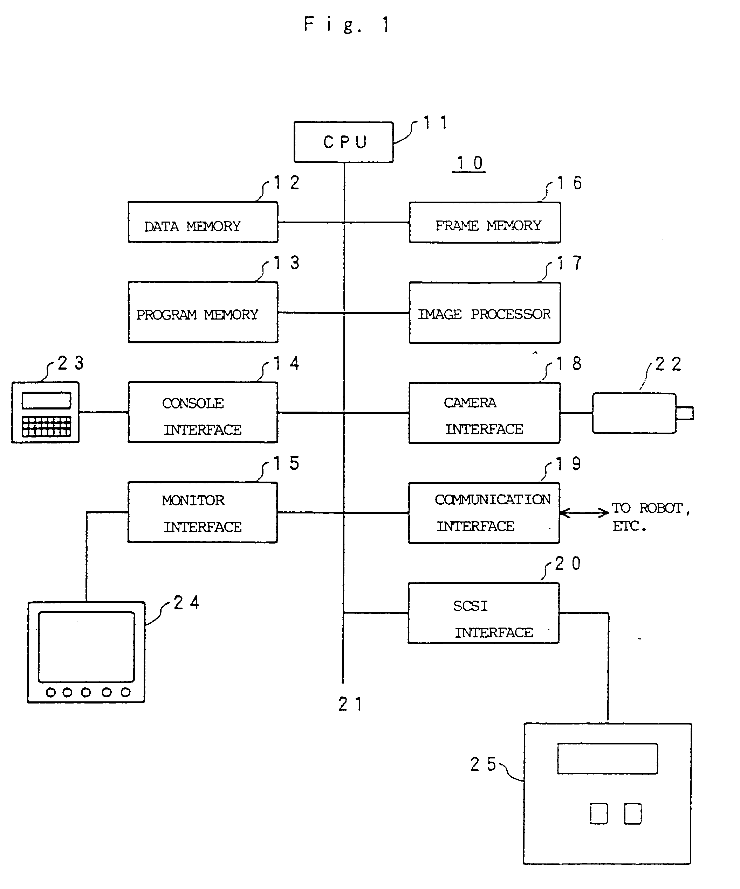

Fig. 1 is a block diagram showing the principal part of a visual sensor for carrying out a method according to the present invention. In Fig. 1, numeral 11 denotes a main central processing unit (hereinafter referred to as main CPU). The main CPU 11 is connected, through a bus 21, to a data memory 12, program memory 13, console interface 14, monitor interface 15, frame memory 16, image processor 17, camera interface 18, communication interface 19, and SCSI (small computer system interface) 20, these elements constituting an image processing apparatus 10 as a whole.

The data memory 12, which is formed of a nonvolatile RAM, is stored with teaching data and various other data for image processing. The program memory 13 is loaded with application programs created by users. The console interface 14 is connected to a console 23. The console 23 is provided with various command keys and ten-keys, by means of which are performed operations for data setting and entry, editing, registration, execution, etc. of the application programs. Further, the console 23 is provided with a display screen, on which the contents of commands and operations, menus for data setting, program list, etc. can be displayed.

The monitor interface 15 is connected to a monitor TV to display an image stored in the frame memory 16 and a live image picked up by a camera 22. The frame memory 16 is loaded with pixel data of an object photographed by means of the camera 22, and the data will be processed as a gray scale image. This pixel data is based on a sensor coordinate system. The image processor 17 processes the image stored in the frame memory 16, thereby identifying the object and detecting the position and attitude thereof.

The camera interface 19 is connected to the camera 22, which is used to photograph objects successively fed onto a production line. The communication interface 19 is connected to a system (not shown) such as a robot, which utilizes a visual sensor system.

Although the above arrangement is similar to that of a conventional visual sensor, the present embodiment is distinguished particularly by that the designed image processing can be executed by using the visual sensor to which an auxiliary storage device as an external memory is attached through the medium of the SCSI 20. More specifically, the SCSI 20 is connected to a photomagnetic disk device as the auxiliary storage device 25. The auxiliary storage device 25 is not limited to the photomagnetic disk device, and may be of a hard disk, optical disk, or other storage device as far as they are capable of writing and reading the data at speeds which are equally as high as the photomagnetic device. Alternatively, a cassette streamer, DAT (digital audio tape recorder), or other storage device in which data are written and read at lower speeds may be used. Any of these storage devices has a storage capacity of several megabytes or more, and can store several thousand to ten thousand image data or more. With the high-speed storage device, in particular, the data can be stored almost simultaneously with the execution of the image processing.

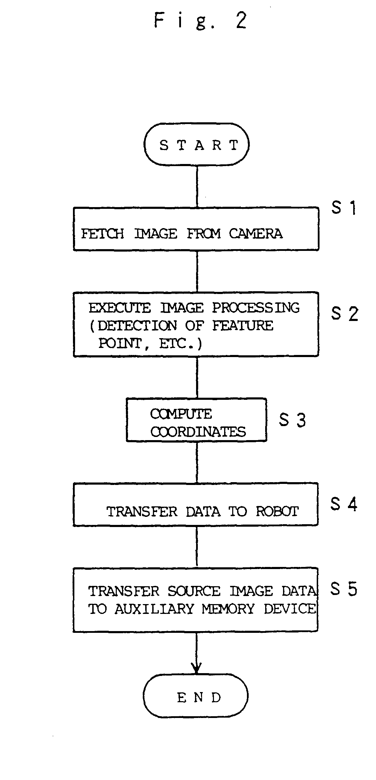

Referring now to the flow chart of Fig. 2, the operation of the present embodiment will be described. When an image processing start command is externally inputted through the communication interface 19, the main CPU 11 starts an image processing program stored in the program memory 13, whereupon an image snap command is first delivered to the camera 22 through the camera interface 18. An image picked up by the camera 22 is loaded into the frame memory 16 after undergoing the processing for gray scale shading by means of the image processor 17 (Step S1). Then, the main CPU 11 issues an object detection command to the image processor 17. Thereupon, in response to this command, the image processor 17 executes image processing by using teaching data previously obtained for the image stored in the frame memory 16, thereby identifying the object and detecting the position and attitude thereof (Step S2).

After executing the image processing in this manner, the data of the detected position and attitude of the object as the data of the coordinate system of the visual sensor is transformed to the data of a robot coordinate system (Step S3), and the transformed informations as correction data are transmitted to the robot through the communication interface 19 (Step S4).

On the other hand, each time the image data (source image data) is picked up by the camera and stored in the frame memory 16, the image data are successively transferred through the SCSI 20 to the auxiliary storage device 25 to be stored therein (Step S5). As each source image data is thus stored in the auxiliary storage device 25, informations on the program used for the image processing, such as a flag for the image processing program, date, serial number, actually detected value, correction data, calibration data, etc., are annexed. If the visual sensor includes a plurality of cameras, the identification numbers of the cameras used to fetch the image are also annexed. In the case of unsuccessful processing, such as a failure in detection, an indication of this failure is also annexed. These annexed pieces information are automatically annexed to the source image data by means of the main CPU 11 in accordance with the processing program previously stored in the program memory 13.

Then, in order to examine whether the established teaching data for the image processing, which has been executed, is appropriate, or examine the cause of the detection failure, by interrupting the operation of the production line which has been in operation, the image input source is switched from the camera 22 to the auxiliary storage device 25 by inputting the change command through the operator console 23.

Thereupon, the operator first causes the menus of the data to be invoked from the auxiliary storage device to be displayed on the screen of the console 23, and selects one of the menus by operating keys, thereby successively invoking undetectable or wrongly detected image data to the frame memory 16. For these image data, the image processor 17 successively executes preprocessings such as gray scale shading, image vignetting, edge emphasizing, etc., and then executes the image processing program again. Observing the result on the monitor TV 24, the operator examines the cause of the failure in the object detection.

Subsequently, another of the menus on the screen of the console 23 is selected, whereby normally detected image data of an optional object are invoked one after another to the frame memory 16 from the auxiliary storage device 25. For these image data, the image processor 17 executes the same image processing program as aforesaid in regular succession. The processed image is caused to appear on the monitor TV 24. At the same time, a point (feature data) for specifying the position of the object recognized by the visual sensor is displayed on the image on the monitor TV 24. When the visual sensor is used to recognize a hole in an article, for example, a cross, corresponding to the center of the hole recongized by the visual sensor, is displayed on the image of the object displayed on the monitor TV 24. Then, the operator determines whether the image processing has been properly executed or not by observing the image of the object on the monitor TV 24, and whether or not the feature data has been correctly fetched by the usual sensor by observing the relationship between the object and the cross, that is, by observing whether or not the cross is always positioned accurately in the center of the hole, or whether or not the center point of the small fluctuation of the cross, if any and if fluctuating in various directions, coincides with the center of the hole. If no satisfactory result is obtained, the operator starts operation for modifying teaching data. Then, the operator establishes (tentatively) new teaching data by means of the console 23. Thereupon, the data is loaded into the data memory 12. Subsequently, the operator transfers the source image data again from the auxiliary storage device 25 to the frame memory 16 through key operation on the console 23. This image data will be processed according to the image processing program based on the modified teaching data, and the result is caused to appear on the monitor TV 24. Then, the operator examines whether or not the cross is situated in the center of the hole in the object or the image on the monitor TV 24, and repeats the operation for modifying the teaching data by trial and error until a satisfactory result is obtained.

Thus, the cause of the detection failure can be examined for the past image processing, and whether the established teaching data is optimum or not can also be examined afterwards even for the normally detected image data. In like manner, whether or not the correction data is properly computed can be examined by using the stored detected data and the like.

In the embodiment described above, all the images picked up by the camera 22 are stored in the auxiliary storage device 25. Alternatively, however, the auxiliary storage device 25 may be designed so that it stores all of those images which have failed to be detected and some of the normally detected images at regular intervals.

## Claims

1. An image processing method for examining images of objects obtained by a visual sensor installed in an industrial environment, the objects being articles which are processed industrially and the method comprising steps of: loading a frame memory (16) with image data of an object picked-up by a camera (22) ; processing the image data in accordance with a processing program; reading the image data from the frame memory (16) ; annexing identification data to the read data in accordance with said processing program; and transferring to and storing the resulting data in an auxiliary storage device (25) so as to store therein image data of a plurality of object images; subsequently transferring undetectable or wrongly detected image data stored in said auxiliary storage device (25) from said auxiliary storage device (25) to said frame memory (16) for the examination of said transferred image data in dependence upon a selection of an image made with reference to relevant identification data annexed to the image data, the selected image being displayed on a screen and the corresponding image data being subjected to preprocessings and then reproductive execution by an appropriate image processing program selected in dependence upon the identification data associated with the image, whereby the image of an object is reviewed subsequently in order to investigate that image to examine the cause of the failure in the object detection.

2. An image processing method for examining images of objects obtained by a visual sensor installed in an industrial environment, the objects being articles which are processed industrially and the method comprising steps of: loading a frame memory (16) with image data of an object picked-up by a camera (22) ; processing the image data in accordance with a processing program; reading the image data from the frame memory (16) ; annexing identification data to the read data in accordance with said processing program; and transferring to and storing the resulting data in an auxiliary storage device (25) so as to store therein image data of a plurality of object images; subsequently transferring, one after another, normally detected image data stored in said auxiliary storage device (25) from said auxiliary storage device (25) to said frame memory (16) for the examination of said transferred image data in dependence upon a selection of an image made with reference to relevant identification data annexed to the image data, the selected image being displayed on a screen and the corresponding image data being subjected to reproductive execution by an appropriate image processing program selected in dependence upon the identification data associated with the image, whereby the image of an object is reviewed subsequently in order to investigate that image by observing the positional relationship between said object and a displayed sign (e.g. a cross) which should coincide with a particular point on the displayed object.

3. An image processing method for an industrial visual sensor according to claim 1 or 2, wherein said identification data include at least one of those data such as data for specifying said image data or a detected value for the image data, program name, calibration data, correction data, and the like.

4. An image processing method for an industrial visual sensor according to any one of the preceding claims, wherein identification data of a camera used to pick up the image concerned is annexed to said identification data when the visual sensor includes a plurality of cameras.

5. An image processing method for an industrial visual sensor according to any one of the preceding claims, wherein identification data indicative of unsuccessful processing, such as a failure in detection, if any, is annexed to said identification data.

6. An image processing method for an industrial visual sensor according to any of the preceding claims, wherein said auxiliary storage device (25) is a large-capacity storage device such as an optical disk, photomagnetic disk, hard disk, cassette streamer or DAT.

7. An image processing method for an industrial visual sensor according to any one of the preceding claims, wherein, of those image data stored in the frame memory (16), all those of unsuccessful detection are transferred to said auxiliary storage device (25) for storage, while the normally detected image data are thinned out in a predetermined process before being transferred and stored.

## Patentansprüche

1. Bildverarbeitungsverfahren zum Prüfen von Objekt-Bildern, die von einem optischen Sensor, der in einer Arbeitsumgebung installiert ist, gewonnen sind, wobei die Objekte Erzeugnisse sind, die industriell bearbeitet werden, und das Verfahren Schritte umfaßt zum
Laden eines Einzelbildspeichers (16) mit Bilddaten eines Objekts, das durch eine Kamera (22) aufgenommen ist,
Verarbeiten der Bilddaten in Übereinstimmung mit einem Verarbeitungsprogramm,
Auslesen der Bilddaten aus dem Einzelbildspeicher (16),
Anfügen von Identifizierungsdaten an die ausgelesenen Daten in Übereinstimmung mit dem Verarbeitungsprogramm und
Übertragen der sich ergebenden Daten zu einer Hilfsspeichereinrichtung (25) und Speichern dieser Daten darin, um in dieser Bilddaten einer Vielzahl von Objekt-Bildern zu speichern, und
nachfolgenden Übertragen nichterfaßbarer oder falsch erfaßter Bilddaten, die in der Hilfsspeichereinrichtung (25) gespeichert sind, von der Hilfsspeichereinrichtung (25) zu dem Einzelbildspeicher (16) zur Prüfung der übertragenen Bilddaten in Abhängigkeit von einer Auswahl eines Bildes, die unter Bezugnahme auf relevante Identifizierungsdaten, die an die Bilddaten angefügt sind, getroffen ist, wobei das ausgewählte Bild auf einem Bildschirm angezeigt wird und die entsprechenden Bilddaten Vorverarbeitungsprozessen und dann einer Wiedergabeausfünrung durch ein geeignetes Bild-Verarbeitungsprogramm unterzogen werden, das in Abhängigkeit von den Identifizierungsdaten, welche dem Bild zugeordnet sind, ausgewählt ist, wodurch das Bild eines objekts nachfolgend überprüft wird, um dieses Bild zu untersuchen, um die Ursache des Scheiterns bei der Objekterfassung zu ermitteln.

2. Bildverarbeitungsverfahren zum Prüfen von Objekt-Bildern, die von einem optischen Sensor, der in einer Arbeitsumgebung installiert ist, gewonnen sind, wobei die Objekte Erzeugnisse sind, die industriell bearbeitet werden und das Verfahren Schritte umfaßt zum
Laden ein Einzelbildspeichers (16) mit Bilddaten eines Objekts, das durch eine Kamera (22) aufgenommen ist,
Verarbeiten der Bilddaten in Übereinstimmung mit einem Verarbeitungsprogramm,
Auslesen der Bilddaten aus dem Einzelbildspeicher (16),
Anfügen von Identifizierungsdaten an die ausgelesenen Daten in Übereinstimmung mit dem Verarbeitungsprogramm und
Übertragen der sich ergebenden Daten zu einer Hilfsspeichereinrichtung (25) und Speichern dieser Daten darin, um in dieser Bilddaten einer Vielzahl von Objekt-Bildern zu speichern, und
nachfolgenden Nacheinanderübertragen normal erfaßter Bilddaten, die in der Hilfsspeichereinrichtung (25) gespeichert sind, von der Hilfsspeichereinrichtung (25) zu dem Einzelbildspeicher (16) zur Prüfung der übertragenen Bilddaten in Abhängigkeit von einer Auswahl eines Bildes, die unter Bezugnahme auf relevante Identifizierungsdaten, die an die Bilddaten angefügt sind, getroffen ist, wobei das ausgewählte Bild auf einem Bildschirm angezeigt wird und die entsprechenden Bilddaten einer Wiedergabeausführung durch ein geeignetes Bild-Verarbeitungsprogramm unterzogen werden, das in Abhängigkeit von den Identifizierungsdaten, welche dem Bild zugeordnet sind, ausgewählt ist, wodurch das Bild eines Objekts nachfolgend überprüft wird, um dieses Bild durch Überwachen der positionsmäßigen Beziehung zwischen dem Objekt und einem angezeigten Zeichen (z. B. einem Kreuz), das mit einem bestimmten Punkt auf dem angezeigten Objekt zusammenfallen sollte, zu untersuchen.

3. Bildverarbeitungsverfahren für einen industriellen optischen Sensor nach Anspruch 1 oder 2, wobei die Identifizierungsdaten zumindest eine Art solcher Daten, wie Daten zum Spezifizieren der Bilddaten oder eines erfaßten Werts für die Bilddaten, einen Programmnamen, Kalibrierungsdaten, Korrekturdaten und dgl., enthalten.

4. Bildverarbeitungsverfahren für einen industriellen optischen Sensor nach einem der vorhergehenden Ansprüche, bei dem Identifizierungsdaten einer Kamera, die benutzt wird, um das betreffende Bild aufzunehmen, an die Identifizierungsdaten angefügt werden, wenn der optische Sensor eine Vielzahl von Kameras enthält.

5. Bildverarbeitungsverfahren für einen industriellen optischen Sensor nach einem der vorhergehenden Ansprüche, bei dem Identifizierungsdaten, die bezeichnend für eine erfolglose Verarbeitung, wie ein Scheitern bei der Erfassung, falls ein solcher Fall vorliegt, an die Identifizierungsdaten angefügt werden.

6. Bildverarbeitungsverfahren für einen industriellen optischen Sensor nach einem der vorhergehenden Ansprüche, wobei die Hilfsspeichereinrichtung (25) eine Speichereinrichtung großer Kapazität, wie eine optische Platte, eine photomagnetische Platte, eine Festplatte, ein sog. Kassetten-Streamer oder ein DAT (Digital Audio Tape), ist.

7. Bildverarbeitungsverfahren für einen industriellen optischen Sensor nach einem der vorhergehenden Ansprüche, bei dem von solchen Bilddaten, die in dem Einzelbildspeicher (16) gespeichert sind, alle diejenigen, welche eine erfolglose Erfassung betreffen, zur Speicherung zu der Hilfsspeichereinrichtung (25) übertragen werden, während die normal erfaßten Bilddaten in einem vorbestimmten Prozeß reduziert werden, bevor sie übertragen und gespeichert werden.

## Revendications

1. Un procédé de traitement d'images pour examiner des images d'objets obtenues par un capteur optique monté dans un environnement industriel, les objets étant des articles qui sont traités industriellement et le procédé comprenant les opérations consistant à : charger une mémoire de trame (16) avec des données image d'un objet prises par une caméra (22) ; traiter les données image en accord avec un programme de traitement ; lire les données image à partir de la mémoire de trame (16) ; annexer des données d'identification aux données lues en accord avec ledit programme de traitement ; et transférer et stocker les données résultantes dans un dispositif de stockage auxiliaire (25) de manière à y stocker des données image d'une pluralité d'images de l'objet ; transférer ensuite des données image indétectables ou détectées à tort, stockées dans ledit dispositif de stockage auxiliaire (25), depuis ledit dispositif de stockage auxiliaire (25) vers ladite mémoire de trame (16) pour l'examen desdites données image transférées en dépendance d'une sélection d'une image effectuée en référence à des données d'identification applicables annexées aux données image, l'image sélectionnée étant affichée sur un écran et les données image correspondantes étant soumises à des pré-traitements et ensuite à une exécution de reproduction par un programme de traitement d'images approprié choisi en dépendance des données d'identification associées à l'image, de sorte que l'image d'un objet est ensuite revue de manière à étudier cette image pour examiner la cause de la panne dans la détection de l'objet.

2. Un procédé de traitement d'images pour examiner des images d'objets obtenus par un capteur optique monté dans un environnement industriel, les objets étant des articles qui sont traités industriellement et le procédé comprenant les opérations consistant à : charger une mémoire de trame (16) avec des données image d'un objet prises par une caméra (22) ; traiter les données image en accord avec un programme de traitement ; lire les données image à partir de la mémoire de trame (16) ; annexer des données d'identification aux données lues en accord avec ledit programme de traitement ; et transférer et stocker les données résultantes dans un dispositif de stockage auxiliaire (25) de manière à y stocker des données image d'une pluralité d'images de l'objet ; transférer ensuite, l'une après l'autre, des données image normalement détectées, stockées dans ledit dispositif de stockage auxiliaire (25), depuis ledit dispositif de stockage auxiliaire (25) vers ladite mémoire de trame (16) pour l'examen desdites données image transférées en dépendance d'une sélection d'une image effectuée en référence à des données d'identification applicables annexées aux données image, l'image sélectionnée étant affichée sur un écran et les données image correspondantes étant soumises à une exécution de reproduction par un programme approprié de traitement d'images qui est choisi en dépendance des données d'identification associées à l'image, de sorte que l'image d'un objet est ensuite revue de manière à étudier cette image en observant la relation de position entre ledit objet et un signe affiché (par exemple une croix) qui coïnciderait avec un point particulier sur l'objet affiché.

3. Un procédé de traitement d'images pour un capteur optique industriel selon la revendication 1 ou 2, dans lequel lesdites données d'identification comprennent au moins une des données telles que des données pour spécifier lesdites données image ou une valeur détectée pour les données image, un nom de programme, des données d'étalonnage, des données de correction, et analogues.

4. Un procédé de traitement d'images pour un capteur optique industriel selon une quelconque des revendications précédentes, dans lequel des données d'identification d'une caméra utilisée pour prendre l'image concernée sont annexées auxdites données d'identification lorsque le capteur optique comprend une pluralité de caméras.

5. Un procédé de traitement d'images pour un capteur optique industriel selon une quelconque des revendications précédentes, dans lequel des données d'identification indicatrices d'un traitement non réussi, tel qu'une panne dans la détection, s'il y en a, sont annexées auxdites données d'identification.

6. Un procédé de traitement d'images pour un capteur optique industriel selon une quelconque des revendications précédentes, dans lequel ledit dispositif de stockage auxiliaire (25) est un dispositif de stockage de grande capacité tel qu'un disque optique, un disque photomagnétique, un disque dur, un dérouleur en continu à cassette ou un dispositif d'enregistrement à bande audio numérique.

7. Un procédé de traitement d'images pour un capteur optique industriel selon une quelconque des revendications précédentes, dans lequel, parmi les données image stockées dans la mémoire de trame (16), toutes celles de détection non réussie sont transférées vers ledit dispositif de stockage auxiliaire (25) pour leur stockage, tandis que les données image détectées normalement sont amincies dans un processus prédéterminé avant d'être transférées et stockées.
